# EUROPEAN PATENT APPLICATION

(11) **EP 4 742 685 A1**
(43) Date of publication of application: **13.05.2026**
(21) Application number: 24847533.7
(22) Date of filing: 07.02.2024
(51) Int. Cl.: H04N 21/81, H04N 21/4788

(54) **AVATAR CONTROL METHOD, APPARATUS, AND RELATED DEVICE**

(30) Priority: 03.08.2023 CN 202310973189; 01.12.2023 CN 202311638844
(71) Applicant: Huawei Cloud Computing Technologies Co., Ltd., Guiyang, Guizhou, 550025 (CN)
(72) Inventor: ZHANG, Huilan, Guiyang, Guizhou 550025 (CN); LI, Chengyuan, Guiyang, Guizhou 550025 (CN); YANG, Changpeng, Guiyang, Guizhou 550025 (CN)
(74) Representative: Pfenning, Meinig & Partner mbB
(86) International application number: PCT/CN2024/076707
(87) International publication number: WO 2025/025564

(57) **Abstract**

This application provides a virtual avatar control method, including: obtaining live streaming interaction data of a live streaming room, where the live streaming interaction data includes live streaming bullet comment data and live streamer speech data, and the live streaming room includes a virtual avatar and a live streamer; determining a target to-be-answered question based on the live streaming bullet comment data, where the live streaming bullet comment data is sent by a viewer in the live streaming room; determining target interaction content based on the target to-be-answered question, where the target interaction content includes reply content of the target to-be-answered question; determining target interaction data based on the target interaction content, where the target interaction data is for displaying the target interaction content to the viewer in the live streaming room by using the virtual avatar, and the target interaction data includes target audio data and target video data; and adding the target interaction data to live streaming data of the live streaming room. In this way, interaction with the viewer is implemented by using the virtual avatar, so that a response can be made to the interaction between the viewer and the live streamer in a timely manner, to improve live streaming watching experience. This application further provides a corresponding apparatus and a related device.

## Description

This application claims priority to Chinese Patent Application No. 202310973189.1, filed with the China National Intellectual Property Administration on August 3, 2023 and entitled "VIRTUAL AVATAR CONTROL METHOD, COMPUTING CLUSTER, AND RELATED DEVICE", and further claims priority to Chinese Patent Application No. 202311638844.4, filed with the China National Intellectual Property Administration on December 1, 2023 and entitled "VIRTUAL AVATAR CONTROL METHOD AND APPARATUS, AND RELATED DEVICE", both of which are incorporated herein by reference in their entireties.

### TECHNICAL FIELD

This application relates to the field of media technologies, and in particular, to a virtual avatar control method and apparatus, and a related device.

### BACKGROUND

With the continuous evolution and development of computer technologies, live streaming is increasingly widely used. In a live streaming scenario, a live streamer may upload a live streaming data stream via a terminal device. The live streaming data stream may be forwarded via a live streaming server (or another device) to a client corresponding to a live streaming viewer. The live streaming data stream may include a video data stream and/or an audio data stream.

In the live streaming scenario, the live streamer needs to display live streaming content to users. In addition, in some scenarios, the live streamer is further responsible for managing a live streaming room, interacting with another live streamer, interacting with viewers, and other tasks. With a heavy workload in live streaming, it may be difficult for the live streamer to balance all aspects.

### SUMMARY

In view of this, embodiments of this application provide a virtual avatar control method, to provide a systematic solution to a problem that it is difficult for a live streamer to balance all aspects in a live streaming scenario. This application further provides a corresponding apparatus, a computing device cluster, a computer-readable storage medium, and a computer program product.

According to a first aspect, this application provides a virtual avatar control method. The virtual avatar control method may be implemented by a virtual avatar control apparatus in a live streaming system, where a virtual avatar may be used to assist in live streaming. The virtual avatar control apparatus may be deployed in at least one data center. Specifically, during live streaming in a live streaming room, the virtual avatar control apparatus may obtain live streaming interaction data. The live streaming interaction data includes live streaming bullet comment data, that is, bullet comment data sent by a viewer to a live streamer. In addition, the live streaming interaction data further includes live streamer speech data, that is, sound data produced by the live streamer in the live streaming room during the live streaming. Then, the virtual avatar control apparatus may determine a target to-be-answered question based on the live streaming bullet comment data, and determine target interaction content based on the to-be-answered question and the live streaming interaction data. The target interaction content includes reply content of the target to-be-answered question. Then, in the virtual avatar control method, target interaction data may be determined based on the target interaction content, and the target interaction data may be added to live streaming data of the live streaming room. The target interaction data is for displaying the target interaction content to the viewer in the live streaming room by using the virtual avatar. When viewing the live streaming data to which the target interaction data is added, the viewer may not only see the live streaming data corresponding to the live streamer, but also see a process in which the virtual avatar displays the target interaction content to the viewer. During the live streaming, the virtual avatar control apparatus may actively obtain the live streaming interaction data of the live streaming room, determine corresponding target interaction content based on a question asked by using a bullet comment, and display the target interaction content to the viewer in the live streaming room by using the virtual avatar. In this way, the target interaction content that needs to be exchanged may be automatically determined based on the live streaming interaction data, and the target interaction content may be further displayed to the viewer by using the virtual avatar. Automatic interaction with the viewer is implemented by using the virtual avatar, so that a response can be made to the interaction between the viewer and the live streamer in a timely manner, to improve live streaming watching experience. In addition, the virtual avatar is used to assist in the live streaming, so that the live streamer does not need to focus mainly on the interaction with the viewer, but pays more attention to live streaming content, to improve live streaming efficiency of the live streamer.

In some possible implementations, the target to-be-answered question may be determined based on the live streamer speech data. Specifically, when the target to-be-answered question is determined, at least one to-be-answered question may be first determined based on the live streaming bullet comment data, and then a to-be-answered question that is not answered by the live streamer is selected from the at least one to-be-answered question based on the live streamer speech data as the target to-be-answered question. In other words, the live streamer speech data does not include audio data for answering the target to-be-answered question. The target to-be-answered question is a question that is asked by the viewer and that is not answered by the live streamer. In this way, the virtual avatar may be used to supplement the question that is not answered by the live streamer, to improve a watching effect in the live streaming room.

In some possible implementations, when the live streamer stops answering questions, the target to-be-answered question may be further answered by using the virtual avatar. Specifically, whether there is a pause in in a live streamer speech in the live streamer speech data may be detected, and the target interaction data is added to the live streaming data after there is a pause in in a live streamer speech in the live streamer speech data. This may avoid affecting a live streaming effect caused by the live streamer and the virtual avatar producing sounds at the same time.

In some possible implementations, the target interaction content may be determined based on a preset virtual avatar knowledge base. Specifically, when the target to-be-answered question is determined, the live streaming bullet comment data may be first clustered to determine a bullet comment intention information set. Then, the target to-be-answered question may be determined based on the bullet comment intention information set. In this way, the live streaming bullet comment data is clustered, and meaningless information in the bullet comment may be filtered out, to answer, in a targeted manner, the question asked by the viewer. When the target interaction content is determined based on the target to-be-answered question, reply content of the target to-be-answered question may be determined from the virtual avatar knowledge base based on the target to-be-answered question, to determine the target interaction content based on the reply content of the target to-be-answered question. In this way, the question asked by the viewer in the live streaming room may be answered.

In some possible implementations, the virtual avatar knowledge base may be further updated. Specifically, if the live streamer actively answers the target to-be-answered question, the virtual avatar knowledge base may be updated based on the target to-be-answered question and audio data that is produced by the target live streamer and that is for answering the to-be-answered question. In other words, if the live streamer actively answers a question asked by the viewer, the virtual avatar knowledge base may be updated based on an answer of the live streamer and the question asked by the viewer. In this way, the virtual avatar knowledge base may be updated, to generate more accurately an answer similar to an answer style and answer content of the live streamer to a question asked by the viewer later.

In some possible implementations, when the target interaction data is generated, the audio data may be first generated, and then the video data may be generated. Specifically, the corresponding target audio data may be first generated based on the target interaction content. Then, the target video data is generated based on related data of the virtual avatar and the target audio data. The related data of the virtual avatar may include, for example, data such as model data of the virtual avatar. In this way, the obtained target video data may be video data of the virtual avatar producing audio corresponding to the target interaction content. From a perspective of the viewer who watches the live streaming, it is equivalent to a case in which the virtual avatar produces a sound while performing a corresponding action synchronously. In this way, synchronizing audio and a video of the virtual avatar improves smoothness of the virtual avatar, to improve a live streaming effect.

In some possible implementations, the target audio data may match a status of the target live streamer. Specifically, the live streamer speech data may be analyzed, to determine a live streamer emotion category. The live streamer emotion category indicates an emotion status of the live streamer in the live streaming room. Then, the target audio data that matches the live streamer emotion category may be generated based on the target interaction content. In this way, a virtual emotion of the virtual avatar may change with an emotion of the live streamer in the live streaming room, to improve a synchronization rate between the virtual avatar and a real-person live streamer, and improves a live streaming effect.

In some possible implementations, the live streamer may further instruct, by using an instruction, the virtual avatar to complete a corresponding action. Specifically, the live streamer speech data may be parsed to determine live streamer instruction information. Specifically, instruction interaction data may be determined based on the live streamer instruction information, and the instruction interaction data may be added to the live streaming data of the live streaming room. The instruction interaction data is for displaying, by using the virtual avatar to the viewer in the live streaming room, an action completed by the virtual avatar as instructed by the live streamer instruction information. In other words, when the live streamer instructs the virtual avatar to complete an action, multimedia data in a process in which the virtual avatar completes the action may be generated, and the multimedia data may be added to the live streaming data of the live streaming room. In this way, the viewer who watches the live streaming may hear and/or see that the virtual avatar completes the action instructed by the live streamer. In this way, the live streamer may instruct, by using an instruction, the virtual avatar to complete an action, to improve flexibility of the virtual avatar and help improve a live streaming effect.

In some possible implementations, there may be a communication barrier between the live streamer and the viewer. For example, a language used by the live streamer may be different from a language used by the viewer. Therefore, a subtitle may be further added to the live streaming room. Specifically, after the live streamer speech data is obtained, the live streamer speech data may be translated to obtain target subtitle data, and the target subtitle data may be added to the live streaming data of the live streaming room. In this way, the viewer in the live streaming room may see the subtitle in a video picture in the live streaming room, to understand a word spoken by the live streamer. In this way, barrier-free communication between the live streamer and the viewer is implemented.

In some possible implementations, the live streaming room may be further adjusted based on an instruction of the live streamer. Specifically, the target live streamer may send a live streaming room operation instruction by using a speech, where the live streaming room operation instruction is for adjusting a live streaming parameter of the live streaming room. After the live streamer speech data is obtained, the live streamer speech data may be parsed to determine the live streaming room operation instruction sent by the target live streamer. Then, the virtual avatar control apparatus may adjust the live streaming data of the target live streaming room based on the live streaming room operation instruction. In this way, the target live streamer may adjust the live streaming data of the target live streaming room by using a speech, and the target live streamer does not need to perform manual adjustment, to improve live streaming efficiency.

According to a second aspect, this application provides a virtual avatar control apparatus. The virtual avatar control apparatus is located in at least one data center, and the apparatus includes: an obtaining module, configured to obtain live streaming interaction data of a live streaming room, where the live streaming interaction data includes live streaming bullet comment data and live streamer speech data, and the live streaming room includes a virtual avatar and a live streamer; a question determining module, configured to determine a target to-be-answered question based on the live streaming bullet comment data, where the live streaming bullet comment data is sent by a viewer in the live streaming room; an interaction content determining module, configured to determine target interaction content based on the target to-be-answered question and the live streaming interaction data, where the target interaction content includes reply content of the target to-be-answered question; an interaction data determining module, configured to determine target interaction data based on the target interaction content, where the target interaction data is for displaying the target interaction content to the viewer in the live streaming room by using the virtual avatar, and the target interaction data includes target audio data and target video data; and a live streaming data adjustment module, configured to add the target interaction data to live streaming data of the live streaming room.

In some possible implementations, the question determining module is specifically configured to: determine at least one to-be-answered question based on the live streaming bullet comment data; and determine the target to-be-answered question from the at least one to-be-answered question based on the live streamer speech data, where the live streamer speech data does not include audio data corresponding to the reply content of the target to-be-answered question.

In some possible implementations, the question determining module is further configured to determine that there is a pause in in a live streamer speech in the live streamer speech data.

In some possible implementations, the virtual avatar control apparatus includes a virtual avatar knowledge base. The question determining module is configured to: determine a bullet comment intention information set by clustering the live streaming bullet comment data; determine the target to-be-answered question based on the bullet comment intention information set. The interaction content determining module is configured to: determine the reply content of the target to-be-answered question from the virtual avatar knowledge base based on the target to-be-answered question; and determine target interaction content based on the reply content.

In some possible implementations, the question determining module is further configured to update the virtual avatar knowledge base based on the target to-be-answered question and audio data for answering the target to-be-answered question.

In some possible implementations, the interaction data determining module is specifically configured to: generate the corresponding target audio data based on the target interaction content; and generate target video data based on the virtual avatar and the target audio data, where the target video data is video data of the virtual avatar producing audio corresponding to the target interaction content.

In some possible implementations, the interaction data determining module is specifically configured to: analyze the live streamer speech data to determine a live streamer emotion category; and generate, based on the target interaction content, the target audio data that matches the live streamer emotion category.

In some possible implementations, the interaction data determining module is further configured to: determine live streamer instruction information based on the live streamer speech data; determine instruction interaction data based on the live streamer instruction information, where the instruction interaction data is for displaying, by using the virtual avatar, an action completed by the virtual avatar as instructed by the live streamer instruction information to the viewer in the live streaming room. The live streaming data adjustment module is further configured to add the instruction interaction data to the live streaming data of the live streaming room.

In some possible implementations, the live streaming data adjustment module is further configured to: determine target subtitle data based on the live streamer speech data; and add the target subtitle data to the live streaming data of the live streaming room.

In some possible implementations, the live streaming data adjustment module is further configured to: parse the live streamer speech data to determine a live streaming room operation instruction; and adjust the live streaming data of the live streaming room based on the live streaming room operation instruction.

According to a third aspect, this application provides a computing device cluster. The computing device cluster includes at least one computing device, and the at least one computing device includes at least one processor and at least one memory. The at least one memory is configured to store instructions, and the at least one processor executes the instructions stored in the at least one memory, to cause the computing device cluster to perform the virtual avatar control method according to any one of the first aspect or the possible implementations of the first aspect. It should be noted that the memory may be integrated into the processor, or may be independent of the processor. The at least one computing device may further include a bus. The processor is connected to the memory through the bus. The memory may include a readable memory and a random access memory.

According to a fourth aspect, this application provides a computer-readable storage medium. The computer-readable storage medium stores instructions. When the instructions are run on at least one computing device, the at least one computing device is caused to perform the method according to any one of the first aspect or the implementations of the first aspect.

According to a fifth aspect, this application provides a computer program product including instructions. When the computer program product runs on at least one computing device, the at least one computing device is caused to perform the method according to any one of the first aspect or the implementations of the first aspect.

Based on the implementations provided in the foregoing aspects, in this application, the implementations may be further combined to provide more implementations.

### BRIEF DESCRIPTION OF DRAWINGS

To describe technical solutions in embodiments of this application more clearly, the following briefly describes the accompanying drawings used for describing embodiments. It is clear that, the accompanying drawings in the following descriptions show only some embodiments described in this application, and persons of ordinary skill in the art may still derive other drawings from these accompanying drawings.
FIG. 1 is a diagram of a scenario of an application scenario according to an embodiment of this application;
FIG. 2 is a schematic flowchart of a virtual avatar control method according to an embodiment of this application;
FIG. 3 is a diagram of a structure of a virtual image control apparatus according to an embodiment of this application;
FIG. 4 is a diagram of a structure of a computing device according to an embodiment of this application;
FIG. 5 is a diagram of a structure of a computing device cluster according to an embodiment of this application; and
FIG. 6 is a diagram of an implementation of a computing device cluster according to an embodiment of this application.

### DESCRIPTION OF EMBODIMENTS

The following describes solutions in embodiments provided in this application with reference to the accompanying drawings in this application.

In the specification, the claims, and the accompanying drawings of this application, the terms "first", "second", and the like are intended to distinguish between similar objects but do not necessarily indicate a specific order or sequence. It should be understood that the terms used in such a way are interchangeable in appropriate circumstances, which is merely a discrimination manner that is used when objects having a same attribute are described in embodiments of this application.

In a live streaming scenario, a live streamer may interact with a viewer. The viewer may use a bullet comment to express an opinion or ask a question. The live streamer may view the bullet comment and provide a feedback, where the feedback may include a video and audio. For another example, the viewer may ask the live streamer a question by sending a bullet comment, and the live streamer may view the bullet comment and answer the question in the bullet comment. For another example, the live streamer may express an opinion during live streaming, and the viewer may comment, by using a bullet comment, on the opinion expressed by the live streamer.

However, in some scenarios, the live streamer needs to complete a heavy workload in live streaming, it is difficult for the live streamer to balance live streaming content and interacting with the viewer. For example, for game live streaming, during game playing, a live streamer may fail to read a bullet comment and make a response to the bullet comment in a timely manner. For another example, for commerce live streaming, a live streamer may not know some information about a product being sold in a live streaming room. If the live streamer fails to interact with a viewer in a timely manner, live streaming watching experience of the viewer may be affected.

Therefore, there may be a role of a live streaming assistant in some live streaming rooms, to assist the live streamer in interacting with the viewer. In embodiments of this application, assisting the live streamer in interacting with the viewer may be referred to as assisting in live streaming for short. In embodiments provided in this application, the live streaming assistant has a virtual avatar.

Optionally, some live streamers may employ a staff member as a live streaming assistant, so that the live streaming assistant helps a live streamer complete a part or all of interaction with a viewer. Specifically, the staff member serving as the live streaming assistant may focus on watching bullet comment information of a live streaming room, and answer the bullet comment information in a timely manner, to complete interaction with the viewer. For example, the live streaming assistant may be responsible for answering a part of questions in the bullet comments, responsible for thanking the viewer for a gift, and responsible for adjusting related parameters of the live streaming room. In addition, the live streaming assistant may further adjust related settings of the live streaming room, for example, may be responsible for adjusting related parameters such as brightness, a filter, and a live streaming bit rate of the live streaming room.

However, in this method, an additional staff member needs to be employed, resulting in high costs and overheads. In addition, the staff member serving as the live streaming assistant may also overlook tasks, and may also miss interaction content.

Alternatively, some live streamers may also use a bullet comment reader to assist in interacting with a viewer. The bullet comment reader may be software installed on a terminal device used by a live streamer. The bullet comment reader may obtain bullet comment data of a live streaming room to obtain bullet comment sent by the viewer; convert a part or all of bullet comments into a speech; and play the speech to the live streamer, so that the live streamer obtains, in a form of a sound, the bullet comment sent by the viewer. Then, the live streamer may make a response based on the speech. In this way, the live streamer does not need to view the bullet comment in person, to improve efficiency of interaction between the live streamer and the viewer. However, in this method, interaction with the bullet comment still relies on the live streamer. Therefore, when the live streamer is busy, the live streamer may fail to interact with the viewer in a timely manner.

Based on this, embodiments of this application provide a virtual avatar control method. The virtual avatar control method may be implemented by a virtual avatar control apparatus in a live streaming system, where a virtual avatar may be used to assist in live streaming. The virtual avatar control apparatus may be deployed in at least one data center. Specifically, during live streaming in a target live streaming room, the virtual avatar control apparatus may obtain live streaming interaction data. The live streaming interaction data includes live streaming bullet comment data, that is, bullet comment data sent by a viewer to a live streamer. In addition, the live streaming interaction data further includes live streamer speech data, that is, sound data produced by the live streamer in the target live streaming room during the live streaming. Then, the virtual avatar control apparatus may determine a target to-be-answered question based on the live streaming bullet comment data, and determine target interaction content based on the to-be-answered question and the live streaming interaction data. The target interaction content includes reply content of the target to-be-answered question. Then, in the virtual avatar control method, target interaction data may be determined based on the target interaction content, and add the target interaction data may be added to live streaming data of the target live streaming room. The target interaction data is for displaying the target interaction content to the viewer in the target live streaming room by using the virtual avatar. When viewing the live streaming data to which the target interaction data is added, the viewer may not only see the live streaming data corresponding to the live streamer, but also see a process in which the virtual avatar displays the target interaction content to the viewer. During live streaming, the virtual avatar control apparatus may actively obtain live streaming interaction data of the live streaming room, determine corresponding target interaction content based on a question asked by using a bullet comment, and display the target interaction content to the viewer in the target live streaming room by using the virtual avatar. In this way, the target interaction content may be automatically determined based on the live streaming interaction data, and the target interaction content may be further displayed to the viewer by using the virtual avatar. Automatic interaction with the viewer is implemented by using the virtual avatar, so that a response can be made to the interaction between the viewer and the live streamer in a timely manner, to improve live streaming watching experience. In addition, the virtual avatar is used to assist in the live streaming, so that the live streamer does not need to focus mainly on the interaction with the viewer, but pays more attention to live streaming content.

The live streaming system includes a live streamer end, a live streaming server, and a viewer client. The live streamer end is configured to provide a service for assisting in live streaming, and the viewer client is configured to provide a service for a viewer. For example, the live streamer end may include a live streamer client and a live streamer serving end. The live streamer client may be live streaming software installed on a terminal device used by a live streamer, and is configured to collect related data during live streaming of the live streamer. The live streamer serving end may be software installed on a server, and is configured to process related data during the live streaming. Optionally, the live streamer serving end may be installed in at least one data center. The viewer client is software installed on a terminal device used by a user.

The live streamer client may obtain a live streaming data stream and send the live streaming data stream to the live streamer serving end. The live streamer serving end may process the live streaming data stream and forward a processed live streaming data stream to the live streaming server. The live streaming server may send the live streaming data stream to the viewer client. The viewer client may receive the live streaming data stream, and play the live streaming data stream to the user in a video manner (or an audio manner). In an example, the foregoing virtual avatar control apparatus may be deployed on the live streamer end of the live streaming system. In another example, the foregoing virtual avatar control apparatus may be deployed on the live streaming server of the live streaming system. An example in which a virtual avatar control apparatus is deployed on a live streamer end is used below for description.

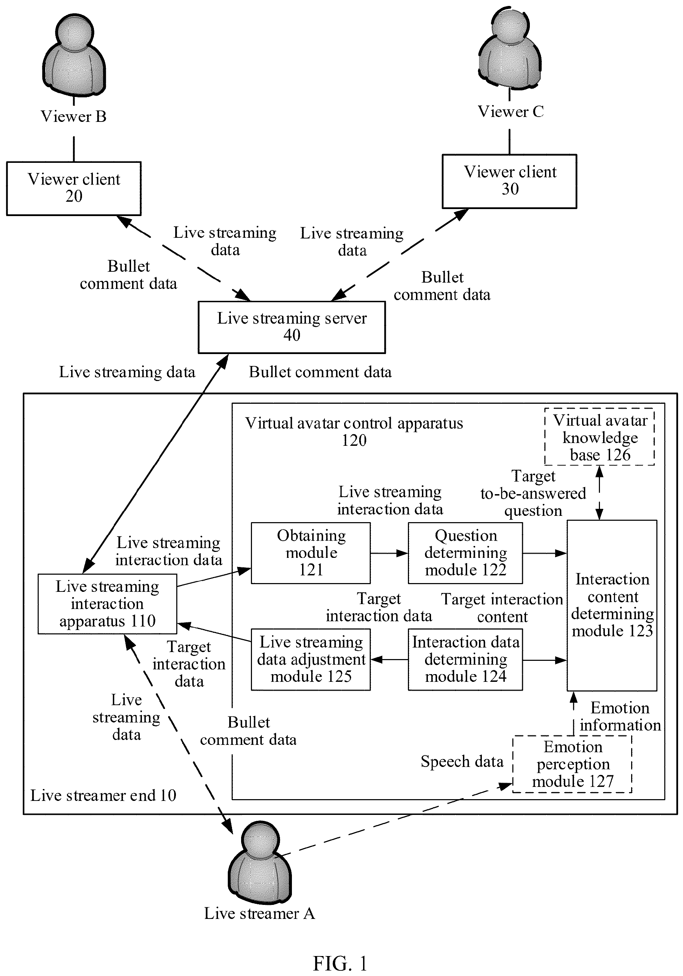

For example, in an application scenario shown in FIG. 1, a live streamer A may use a live streamer end 10 to perform live streaming, a viewer B may use a viewer client 20 to watch the live streaming of the live streamer A, a viewer C may use a viewer client 30 to watch the live streaming of the live streamer A, and a live streaming server 40 is configured to implement data processing and forwarding during the live streaming.

The live streamer end 10 includes a live streaming interaction apparatus 110 and a virtual avatar control apparatus 120. The live streaming interaction apparatus 110 is configured to: collect data generated during the live streaming of the live streamer A to obtain a live streaming data stream; and send the live streaming data stream to the live streaming server 40. The data collected by the live streaming interaction apparatus 110 may include, for example, at least one type of data in video data collected by using a camera, audio data collected by using a microphone, video data and/or audio data collected through screen recording, or other data. The live streaming interaction apparatus 110 may further receive bullet comment data sent by the live streaming server 40, and display the bullet comment data to the live streamer A.

The virtual avatar control apparatus 120 may collect live streaming interaction data of the live streamer A during the live streaming; determine target interaction content based on the live streaming interaction data; determine, based on a virtual avatar, target interaction data of a process in which the virtual avatar displays the target interaction content; and add the target interaction data to the live streaming data stream. In this way, the live streaming data stream received by the live streaming server 40 includes not only the data collected by the live streaming interaction apparatus 110, but also the target interaction data added by the virtual avatar control apparatus 120. In this case, video data viewed by the viewer client 20 and the viewer client 30 includes not only video data of the live streaming performed by the live streamer A, but also video data of the target interaction content displayed by using the virtual avatar. In this way, the virtual avatar may be used to assist the live streamer in interacting with a viewer.

As shown in FIG. 1, the virtual avatar control apparatus 120 may include an obtaining module 121, a question determining module 122, an interaction content determining module 123, an interaction data determining module 124, and a live streaming data adjustment module 125. The obtaining module 121 may be configured to obtain live streaming interaction data of a target live streaming room. The question determining module 122 may be configured to determine a target to-be-answered question based on live streaming bullet comment data. The interaction content determining module 123 may be configured to determine target interaction content based on the target to-be-answered question. The interaction data determining module 124 may be configured to determine target interaction data based on the target interaction content and a virtual avatar. The live streaming data adjustment module 125 may be configured to add the target interaction data to live streaming data of the target live streaming room.

In an implementation shown in FIG. 1, the virtual avatar control apparatus 120 runs on the live streamer end 10. Optionally, the live streamer end 10 may include a live streamer client and a live streamer serving end. The live streamer client may be installed on a terminal device used by the live streamer A, and the live streamer serving end may be installed in a data center. Optionally, the virtual avatar control apparatus 120 may be a module in the live streamer client, or may be a module in the live streamer serving end. In other words, the virtual avatar control apparatus 120 may be located in a terminal device, or may be located in a data center.

The following describes in detail various non-limiting specific implementations of a virtual avatar control process.

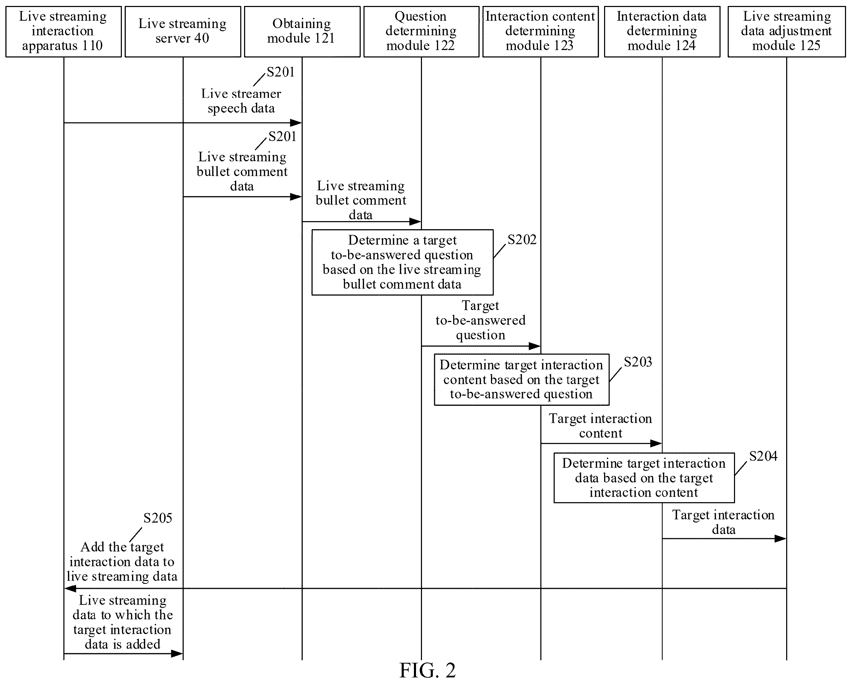

FIG. 2 is a schematic flowchart of a virtual avatar control method according to an embodiment of this application. The method may be applied to the application scenario shown in FIG. 1, or may be applied to another applicable application scenario. The following uses an example in which the method is applied to the application scenario shown in FIG. 1 for description. It should be noted that, in the application scenario shown in FIG. 1, the virtual avatar control apparatus 120 may include not only an obtaining module 121, an interaction content determining module 123, an interaction data determining module 124, and a live streaming data adjustment module 125, but also a virtual avatar knowledge base 126 and an emotion perception module 127. In addition, for functions of the modules, refer to related descriptions in the following embodiment.

The method shown in FIG. 2 may specifically include the following steps.

S201: The obtaining module 121 obtains live streaming interaction data of a live streaming room.

To assist a live streamer in interacting with a viewer in a target live streaming room, the virtual avatar control apparatus 120 may obtain live streaming interaction data of the target live streaming room, to determine, based on the live streaming interaction data, content that needs to be displayed during interaction. Specifically, the virtual avatar control apparatus 120 may obtain the live streaming interaction data of the target live streaming room by using the obtaining module 121.

In this embodiment of this application, the live streaming room is a live streaming room corresponding to the virtual avatar control apparatus 120, and may also be referred to as the target live streaming room. For example, in the implementation shown in FIG. 1, a live streaming room corresponding to the live streamer A may be considered as the target live streaming room. For ease of description, in this application, a live streamer corresponding to the target live streaming room may be referred to as the target live streamer.

The live streaming interaction data is interaction data generated in the target live streaming room during live streaming, and is for transferring information to another party. The interaction data is sent by an object and is for transferring information to another object. The live streaming interaction data may include live streaming bullet comment data and live streamer speech data. The live streaming bullet comment data is data sent by a user during watching of the live streaming in the target live streaming room, and is for transferring information to the live streamer. The live streamer speech data is data corresponding to a speech produced by the target live streamer during the live streaming, and is for performing interaction with another object.

Optionally, the live streamer speech data may include audio data produced by the target live streamer during communication with the viewer, or may include audio data produced by the target live streamer during communication with another object. For example, if the target live streamer performs voice chatting with another live streamer, the live streamer speech data may also include audio data produced by the target live streamer during the voice chatting.

In this embodiment of this application, the live streaming bullet comment data may be obtained from the live streaming server 40. Specifically, the viewer in the target live streaming room may send a bullet comment to the live streaming server 40 via a viewer client. The live streaming server 40 may receive bullet comments sent by a plurality of viewers who are watching the target live streaming room, and send the bullet comments to the live streamer end 10, so that a live streamer client displays, to the live streamer, the bullet comments sent by the viewers. Correspondingly, the obtaining module 121 may obtain the live streaming bullet comment data sent by the live streaming server 40. Optionally, the live streaming interaction apparatus 110 may receive bullet comment data sent by a live streaming server. The obtaining module 121 may obtain, from the live streaming interaction apparatus 110 through a preset interface, the live streaming bullet comment data sent by the live streaming server 40.

In the implementation shown in FIG. 1, the virtual avatar control apparatus 120 is deployed on the live streamer end 10. Correspondingly, the obtaining module 121 may obtain live streamer speech data by using a related module in a live streamer client, for example, may obtain the live streamer speech data by using a microphone of a terminal device used by the live streamer. It can be learned from the foregoing descriptions that the speech of the target live streamer during the live streaming may be sent to the live streaming server 40 via the live streamer end 10, and then sent by the live streaming server 40 to the viewer client of the viewer who watches the target live streaming room. In this way, the obtaining module 121 may obtain the live streamer speech data from the live streamer end 10.

It may be understood that, if the virtual avatar control apparatus is deployed at another location, the live streamer speech data may be obtained by parsing a live streaming data stream of the target live streaming room. For example, assuming that the virtual avatar control apparatus is deployed on a live streaming server, after obtaining the live streaming data stream sent by the live streamer end, the virtual avatar control apparatus may parse the live streaming data stream, to obtain the live streamer speech data in the live streaming data stream.

In a live streaming scenario, data is mainly transmitted in a form of a data stream. Correspondingly, the live streaming interaction data obtained by the obtaining module 121 may be data in a data stream format. In other words, the obtaining module 121 may obtain a live streaming bullet comment data stream and a live streamer speech data stream. Correspondingly, subsequent processing based on the live streaming interaction data may be processing based on a data stream.

After obtaining the live streaming interaction data of the target live streaming room, the obtaining module 121 may send the live streaming interaction data to the interaction content determining module 123, so that the interaction content determining module 123 determines target interaction content based on a target to-be-answered question.

S202: The question determining module 122 determines the target to-be-answered question based on the live streaming bullet comment data.

After obtaining the live streaming interaction data, the question determining module 122 may determine the target to-be-answered question based on the live streaming bullet comment data, to control a virtual avatar to answer the to-be-answered question. The target to-be-answered question is a question asked, by using a bullet comment, by the viewer who watches the target live streaming room. In this embodiment of this application, the virtual avatar control apparatus 120 may control the virtual avatar to answer a part or all of questions asked by the viewer, to improve live streaming watching experience of the viewer, and implement a function of a live streaming assistant.

To control the virtual avatar to answer a question asked by a viewer, first, a to-be-answered question may be determined. In this embodiment of this application, the to-be-answered question that is determined by the question determining module 122 and that is asked by the viewer by using a bullet comment may be referred to as the target to-be-answered question. Optionally, the target to-be-answered question may be one question, or may include a plurality of questions. Specifically, the question determining module 122 may parse the live streaming bullet comment data to determine the question asked by the viewer in the target live streaming room, and then determine the to-be-answered question from the question asked by the viewer in the target live streaming room.

In an actual scenario, there may be a large quantity of viewers in the target live streaming room, and each viewer who watches the target live streaming room may send a bullet comment. The bullet comment sent by the viewer may be for asking the target live streamer a question, or may have another purpose. Each viewer may ask the target live streamer a question, and different viewers may ask a same question, or different questions. In addition, a same viewer may also ask the target live streamer a plurality of different questions by using a plurality of bullet comments, or may ask the target live streamer a plurality of same or similar questions by using a plurality of bullet comments. Consequently, there may be a plurality of bullet comments for asking questions in the live streaming bullet comment data, and questions asked by using different bullet comments may be the same or different. Moreover, in addition to asking the target live streamer a question, the viewer in the target live streaming room may further achieve another purpose by sending a bullet comment. Consequently, there are both bullet comments for asking questions and bullet comments not for asking questions in the live streaming bullet comment data.

Therefore, the question determining module 122 may first perform preprocessing on bullet comments in the live streaming bullet comment data by screening out, from the live streaming bullet comment data, non-repeated bullet comments for asking the target live streamer a question, and then determine the to-be-answered question based on the bullet comments. Optionally, a bullet comment intention information set may be first determined by clustering the live streaming bullet comment data, and then the target to-be-answered question may be determined based on the bullet comment intention information set. The bullet comment intention information set includes a plurality of pieces of bullet comment intention information. Each piece of bullet comment intention information corresponds to intention information of one bullet comment (or more bullet comments), and represents an intention of a viewer that sends the one bullet comment (or more bullet comments).

The question determining module 122 may first perform repeated filtering on the live streaming bullet comment data, where the repeated filtering refers to deleting bullet comments with consistent content. In this way, the bullet comments with the consistent content may be deleted from the live streaming bullet comment data, to reduce a quantity of bullet comments that need to be processed in a subsequent step.

Then, the question determining module 122 may cluster filtered live streaming bullet comment data to obtain the bullet comment intention information set. For example, clustering may be performed based on similarities of bullet comments, or clustering may be performed based on semantics of bullet comments. A clustering method is not limited in this embodiment of this application. After determining the bullet comment intention information set, the question determining module 122 may determine a plurality of to-be-answered questions from the bullet comment intention information set. Each to-be-answered question corresponds to one piece of bullet comment intention information, and represents a question asked by one viewer (or more viewers) by using a bullet comment.

After bullet comments are clustered, bullet comments of a same category are clustered into one category. In other words, if there are a plurality of bullet comments with similar expressions in the live streaming bullet comment data, these bullet comments are clustered into one category. Bullet comments of different categories are for expressing different meanings, and bullet comments of a same category are for expressing a same meaning. In this way, during subsequent processing, bullet comments of one category may be replaced with a specific bullet comment in the bullet comments of the category, to ignore a remaining bullet comment in the bullet comments of the category. For example, a bullet comment in a clustering center may be used as a representative for the bullet comments of the category for subsequent processing. In this way, a quantity of to-be-processed bullet comments is further reduced by replacing bullet comments of one category with one bullet comment, to improve processing efficiency. In addition, bullet comments that are not for asking the target live streamer a question may be further filtered out of bullet comments by clustering the bullet comments. For example, if the live streaming bullet comment data includes a bullet comment for asking the target live streamer a question, and further includes a bullet comment for communicating with another viewer, after the live streaming bullet comment data is clustered, bullet comments for different purposes are separately clustered into a plurality of categories. The bullet comments for asking the target live streamer questions are not clustered with another bullet comment into one category. In this case, when the to-be-answered question is determined, only the bullet comments for asking the target live streamer questions may be focused on, and bullet comments for another purpose are ignored, to reduce a quantity of to-be-processed bullet comments. A specific clustering implementation is not limited in this embodiment of this application.

After determining a plurality of to-be-answered questions, the question determining module 122 may determine the target to-be-answered question from the plurality of to-be-answered questions. Optionally, the question determining module 122 may perform evaluation based on importance degrees of questions. For example, the question determining module 122 may separately perform importance evaluation on each to-be-answered question, to obtain an importance evaluation result of the to-be-answered question. An importance evaluation result of a to-be-answered question indicates an importance degree of the to-be-answered question.

In some implementations, the question determining module 122 may perform importance evaluation on the to-be-answered questions with reference to at least one evaluation influence factor, to obtain an importance evaluation result. It should be noted that the at least one evaluation influence factor for performing importance evaluation on the to-be-answered questions may be an evaluation influence factor configured by an administrator, or may be an evaluation influence factor obtained by adjusting, based on an actual service requirement, an evaluation influence factor that is initially set, or may be an evaluation influence factor newly configured by an administrator before the to-be-answered questions are received. A quantity and content of configured evaluation influence factors are not limited in this embodiment of this application.

In some embodiments, a configuration process of an evaluation rule is: receiving an evaluation rule configuration request, where the evaluation rule configuration request is for requesting to configure one or more of a type, a priority, and a weight of the at least one evaluation influence factor. Based on this, the at least one evaluation influence factor and a priority and a weight of each evaluation influence factor are stored based on information carried in the evaluation rule configuration request.

Optionally, when a plurality of evaluation influence factors are configured, the question determining module 122 may also select, in response to configuration by the administrator, a preset quantity of evaluation influence factors with a higher priority to perform importance evaluation on the to-be-answered questions. A quantity of evaluation influence factors used when importance evaluation is performed on the to-be-answered questions is not limited in this embodiment of this application.

After the importance evaluation results of the to-be-answered questions are determined, the target to-be-answered question may be determined based on the importance evaluation results of the to-be-answered questions. Optionally, N to-be-answered questions with highest importance may be determined as the target to-be-answered questions, where N is a positive integer. Optionally, N may be a preconfigured quantity of questions that can be answered by the virtual avatar.

In some implementations, a question asked by the viewer by using a bullet comment may be abstract, resulting in difficulty in determining the reply content. Correspondingly, after the to-be-answered questions that need to be answered are selected and before the target to-be-answered question is determined, the to-be-answered questions may be clustered to determine a fundamental question in the to-be-answered questions, and the fundamental question may be used as the target to-be-answered question. Optionally, the question determining module 122 may determine, from a corpus in a semantic clustering manner, the fundamental question corresponding to the to-be-answered question. The corpus pre-stores a plurality of fundamental question corpora, and each fundamental question corpus corresponds to one fundamental question. Optionally, the corpus may be the virtual avatar knowledge base 126.

In a possible implementation, the plurality of fundamental question corpora pre-stored in the corpus may be classified into a plurality of levels, each level corresponds to at least one fundamental question corpus, and granularities for fundamental question corpora corresponding to different levels may be different. Optionally, the corpus includes a plurality of corpus scenarios, for example, live streaming, a conference chat, a webinar, and an online class. Each corpus scenario corresponds to one category tree. The category tree includes a plurality of levels, a granularity at each level is different, each level includes at least one category node, and each category node corresponds to at least one fundamental question. A granularity indicates how a fundamental question corpus is specifically described at a level. A higher level has a larger granularity, so that a question description of a fundamental question corresponding to a category node at the level is more general. A lower level has a smaller granularity, so that a question description of a fundamental question corresponding to a category node at the level is more detailed.

The to-be-answered questions may be categorized based on a target level. Specifically, a plurality of fundamental questions included in the target level may be first determined, and then a fundamental question corresponding to the to-be-answered questions may be selected from the plurality of fundamental questions as the target to-be-answered question. The target level for categorization may be a preset level. In this way, a plurality of fundamental questions may be obtained from a fundamental question corpus corresponding to the target level, so that the target to-be-answered question is selected more accurately, and an amount of calculation for performing semantic clustering based on the corpus is reduced, to significantly improve semantic clustering efficiency.

In an actual scenario, the viewer in the target live streaming room may ask the target live streamer a plurality of questions, and the target live streamer answers a part of the plurality of questions, but does not answer a remaining question. In this case, when being controlled to interact with the viewer, the virtual avatar may answer a question that is asked by the viewer and that is not answered by the target live streamer, and does not answer the question that is answered by the target live streamer. In other words, when determining the target to-be-answered question, the question determining module 122 may select a to-be-answered question that is not answered by the target live streamer as the target to-be-answered question.

Specifically, the question determining module 122 may determine at least one to-be-answered question based on the live streaming bullet comment data, and then determine the target to-be-answered question from the to-be-answered question based on the live streamer speech data. Specifically, the question determining module 122 may analyze the live streamer speech data, to determine, based on the live streamer speech data, to-be-answered questions that have been answered by the target live streamer. Then, the question determining module 122 may exclude, from a bullet comment intention information set, the to-be-answered questions that have been answered by the target live streamer. In this case, a remaining to-be-answered question in the bullet comment question set is a to-be-answered question that is not answered by the target live streamer, and the question determining module 122 may determine the target to-be-answered question from the question.

In some possible implementations, the question determining module 122 may convert a speech produced by the target live streamer into a text, to determine, based on the text, a to-be-answered question that has been answered by the target live streamer. Specifically, the question determining module 122 may convert the live streamer speech data into text data by invoking a speech-to-text function of the live streamer end 10. Then, the question determining module 122 may analyze the text data obtained through conversion, to determine information expressed by the target live streamer during the live streaming. Then, a bullet comment question information set may be used to match the text data, and a part that is in the text data and that is for answering the to-be-answered question asked by the viewer is determined.

Optionally, the virtual avatar control apparatus 120 may assist the target live streamer in interaction when there is a pause from the target live streamer. A pause from the target live streamer may include that a pause in a speech of the target live streamer. Specifically, if the virtual avatar control apparatus 120 also controls the virtual avatar to interact with a viewer while the target live streamer interacts with the viewer, this may cause two objects to interact with the viewer at the same time during the live streaming, resulting in affecting watching experience of the viewer. Therefore, in some possible implementations, the virtual avatar may be controlled to interact with the viewer when there is a pause from the target live streamer.

In other words, the question determining module 122 may determine, based on the live streamer speech data, whether there is a pause from the target live streamer. Specifically, the question determining module 122 may determine whether there is a pause in a live streamer speech data stream. For example, whether there is a part with no live streamer speech in the live streamer speech data stream may be monitored. If there is a pause, for example, there is no live streamer speech within preset duration, it indicates that there is a pause from the target live streamer during the live streaming. In this way, the question determining module 122 may analyze the live streamer speech data to determine the target to-be-answered question. This may avoid the target live streamer and the virtual avatar interacting with the viewer at the same time, to improve live streaming watching experience of the viewer.

In addition, when there is a pause form the live streamer, there is a high probability that a question asked by a viewer cannot be answered. For example, the live streamer may leave the terminal device used for the live streaming for some reason, causing the live streamer to miss a question asked by the viewer. Therefore, the live streamer cannot answer the question asked by the viewer. For another example, the live streamer may mute the microphone for some reason, and the live streamer end does not collect a speech produced by the live streamer. Therefore, the viewer cannot obtain an answer of the live streamer to the question. In the foregoing scenario, a pause from the live streamer is also accompanied by a question that is asked by the viewer and that is not answered in a timely manner. Therefore, after it is determined that there is a pause from the target live streamer, the virtual avatar control apparatus 120 interacts with the viewer, so that a problem that the question asked by the viewer cannot be answered in a timely manner may be promptly overcome.

Optionally, the live streaming interaction data may be determined after it is determined that target live streamer is live streaming. For example, bullet comment data within preset time before a pause may be used as the live streaming bullet comment data in the live streaming interaction data, and/or audio data produced by the live streamer within preset time before a pause is used as the live streamer speech data in the live streaming interaction data.

S203: The interaction content determining module 123 determines the target interaction content based on the target to-be-answered question.

After determining the target to-be-answered question, the interaction content determining module 123 may determine the target interaction content based on the target to-be-answered question. The target interaction content may include reply content of the target to-be-answered question. In other words, to assist the target live streamer in interacting with the viewer in the target live streaming room, the virtual avatar control apparatus 120 may determine, by emulating the target live streamer, the target interaction content for making a response to the bullet comment. In other words, the target interaction content may be for replacing the target live streamer, to make a response to the bullet comment.

In this embodiment of this application, making a response to the bullet comment by the target live streamer includes answering, by the target live streamer, a question asked by the viewer. Correspondingly, the virtual avatar control apparatus 120 may control the virtual avatar to replace the target live streamer, to answer the question asked by the viewer. The target interaction content may include an answer to the question asked by the viewer. In other words, the interaction content determining module 123 may determine, based on the live streaming interaction data, content that needs to be answered for the viewer in the target live streaming room.

After determining the target to-be-answered question, the interaction content determining module 123 may determine an answer to the target to-be-answered question, where the answer to the target to-be-answered question is the target interaction content. Optionally, if the interaction content determining module 123 determines a plurality of target to-be-answered questions, the target interaction content may include answers to the target to-be-answered questions. In addition, a sequence of the answers to the target to-be-answered questions in the target interaction content may match a sequence in which the target to-be-answered questions are asked.

Optionally, the reply content of the target to-be-answered question may be determined based on the virtual avatar knowledge base 126 of the live streamer end 10, and then the target interaction content may be generated based on the reply content. The reply content of the target to-be-answered question may be the answer to the target to-be-answered question. The virtual avatar knowledge base 126 is a preset database for answering a question asked by the viewer. The virtual avatar knowledge base 126 may include a plurality of preset questions and answers corresponding to the preset questions. After the target to-be-answered question is determined, a preset question corresponding to the target to-be-answered question may be selected from the plurality of preset questions based on the target to-be-answered question, and an answer to the preset question is determined as the target interaction content.

Optionally, the virtual avatar control apparatus 120 may further update the virtual avatar knowledge base 126. For example, if the target live streamer actively answers a question asked by a viewer, the virtual avatar knowledge base 126 may be updated based on an answer of the target live streamer and the question asked by the viewer. Specifically, if the target live streamer actively answers the target to-be-answered question, the virtual avatar knowledge base may be updated based on the target to-be-answered question and audio data that is produced by the target live streamer and that is for answering the to-be-answered question.

In the implementation described above, the target interaction content determined by the interaction content determining module 123 may be for replacing the live streamer, to answer a question of the viewer. In some other possible implementations, the interaction content determining module 123 may further determine target interaction content in another interaction scenario.

In some implementations, the target interaction content may be further for controlling the virtual avatar to complete some actions. The interaction content determining module 123 may determine, based on the live streamer speech data and/or the live streaming bullet comment data, an action that needs to be completed by the virtual avatar. For example, the target live streamer may instruct, by using a speech, the virtual avatar to complete some actions, and a viewer may also instruct, by sending a bullet comment, the virtual avatar to complete some actions. For ease of description, an action that the virtual avatar is instructed to complete is referred to as a target action in the following.

An example in which the target live streamer instructs the virtual avatar to complete the target action by using a speech is used. The interaction content determining module 123 may first determine instruction information based on the live streamer speech data, and then determine the target interaction content based on the instruction information. The target interaction content corresponds to the target action, for example, may include model data in a process in which the virtual avatar completes the target action. The model data is rendered, to obtain video data of the virtual avatar completing the target action.

Optionally, a plurality of pieces of preset instruction information may be set in the virtual avatar control apparatus 120 in advance, and a correspondence between preset instruction information and interaction content may be established. In this way, the target live streamer and/or the viewer in the target live streaming room may instruct, by using the preset instruction information, the virtual avatar to complete corresponding interaction content. Specifically, after the instruction information is obtained by parsing the live streamer speech data or the live streaming bullet comment data, if the instruction information matches a piece of preset instruction information, interaction content corresponding to the preset instruction information may be determined as the target interaction content.

After the interaction content determining module 123 determines the target interaction content, the interaction content determining module 123 may send the target interaction content to the interaction data determining module 124, so that the interaction data determining module 124 determines target interaction data.

S204: The interaction data determining module 124 determines the target interaction data based on the target interaction content.

After the target interaction content is determined based on the live streaming interaction data, the interaction data determining module 124 may determine the target interaction data based on the target interaction content. The target interaction data is for displaying the target interaction content to the viewer in the target live streaming room by using the virtual avatar, where the target interaction content includes target video data and target audio data. The virtual avatar may be a preset animation avatar or a preset entity avatar, and is for assisting the target live streamer in interacting with a bullet comment.

The target interaction data includes media data, and is for displaying the target interaction content to the viewer in the target live streaming room by using the virtual avatar. The target interaction data is added to the live streaming data of the target live streaming room, so that the viewer in the target live streaming room may see and/or hear the target interaction content displayed by the virtual avatar. Specifically, the target interaction data may include video data, and the video data is data of the virtual avatar displaying the target interaction content, for example, may include animation data of the virtual avatar completing the target action. The target interaction data may further include audio data, and the audio data corresponds to the target interaction content. To distinguish from the audio data and the video data in the live streaming data stream, the audio data in the target interaction data is referred to as the target audio data below, and the video data in the target interaction data is referred to as the target video data below.

It can be learned from the foregoing description that, the target interaction content may include the answer to the question asked by the viewer, or may include the model data in the process in which the virtual avatar completes the target action. The following separately describes two implementations.

In a first implementation, the target interaction content includes the answer to the question asked by the viewer. The target interaction data may include the target audio data and the target video data. When determining the target interaction data, the interaction data determining module 124 may first determine the target audio data based on the target interaction content, and then determine the target video data based on the target audio data and the virtual avatar.

Specifically, if the target interaction content is data in a text format, the interaction data determining module 124 may first convert the target interaction content into the target audio data. For example, the target audio data corresponding to the target interaction content may be generated based on a preset audio database. The target audio data is for simulating the virtual avatar reading a text corresponding to the target interaction content. In this way, the target audio data is added to the live streaming data, so that a user who watches the target live streaming room may hear the target audio data, to learn of the answer to the question.

Optionally, the interaction data determining module 124 may further generate the target audio data with reference to a status of the target live streamer, so that the generated target audio data matches the status of the target live streamer, and the virtual avatar matches an actual status of the target live streamer, to improve an effect of assisting in the live streaming.

Specifically, the emotion perception module 127 may analyze the live streamer speech data, to determine emotion information of the target live streamer during the live streaming. Then, the interaction data determining module 124 may generate, based on the target interaction content, target audio data corresponding to the emotion information. Optionally, a plurality of audio databases may be preset in the virtual avatar control apparatus 120, and different audio databases correspond to different emotion information. For example, audio in an audio database A in the plurality of audio databases may be obtained through recording in an angry mood, and audio in an audio database B in the plurality of audio databases may be obtained through recording in a happy mood. After the emotion information is determined, an audio database that matches the emotion information may be selected based on the emotion information, and the target audio data is generated by using the selected audio database. In this way, an emotion of the generated target audio data matches an actual emotion of the target live streamer, and the emotion that is of the target live streamer and that is sensed by the viewer in the target live streaming room matches an emotion of the virtual avatar, to achieve an effect that the virtual avatar simulates the emotion of the target live streamer.

After the target audio data is generated based on the target interaction content, corresponding target video data may be generated based on the target audio data and the virtual avatar. The target video data may be video data of the virtual avatar producing the target audio data. In other words, if the virtual avatar includes a face, the target video data may display a facial movement in a process in which the virtual avatar produces the target audio data. For example, if the virtual avatar is an animation avatar corresponding to the target live streamer, the video data may include an animation in which the animation avatar produces a sound corresponding to the target audio data. The target video data may be synchronized with the target audio data. To be specific, a virtual avatar displayed in the target video data at a time point is consistent with a virtual avatar that produces the target audio data at the time point.

In this way, after the target video data and the target audio data are added to the live streaming data of the target live streaming room, the viewer who watches the target live streaming room may hear the audio corresponding to the target interaction content, and see an avatar of the virtual avatar producing the audio corresponding to the target interaction content. In this way, for the viewer, watching the target live streaming room is equivalent to watching the virtual avatar delivering the audio corresponding to the target interaction content, so that an objective of answering, by using the virtual avatar, the question asked by the viewer in the target live streaming room is achieved, to improve watching experience of the viewer in the target live streaming room.

In a second implementation, the target interaction content includes the model data in the process in which the virtual avatar completes the target action.

The target interaction data may include the target video data. When determining the target interaction data, the interaction data determining module 124 may render the model data into visualized two-dimensional image data, to obtain the target video data. Optionally, if the virtual avatar is an animation avatar, the target video data obtained through rendering may be animation data in the process in which the virtual avatar completes the target action.

Optionally, the target interaction data may further include the target audio data. The target audio data may correspond to the target video data. For example, the target audio data may be determined based on the target action. Specifically, assuming that a plurality of actions that can be completed by the virtual avatar are preconfigured, audio data may be set for one or more of the plurality of actions. When determining the target interaction data, the interaction data determining module 124 may select audio data corresponding to the target action as the target audio data.

After obtaining the live streaming interaction data, the interaction data determining module 124 may send the target interaction data to the live streaming data adjustment module 125, to add the target interaction data to live streaming data of the target live streaming room.

S205: The live streaming data adjustment module 125 adds the target interaction data to live streaming data of the target live streaming room.

After determining the target interaction data corresponding to the live streaming interaction data, the live streaming data adjustment module 125 may add the target interaction data to the live streaming data of the target live streaming room.

In an actual scenario, the live streaming data of the target live streaming room may be a data stream. The live streaming interaction apparatus 110 may collect a video data stream and an audio data stream, and upload the video data stream and the audio data stream as a live streaming data stream of the target live streaming room to the live streaming server 40. In this embodiment of this application, the live streaming data adjustment module 125 may add the target interaction data to the live streaming data stream of the target live streaming room in a form of a video stream.

Specifically, if the target interaction data includes the target video data and the target audio data, the live streaming data adjustment module 125 may first determine a target video data stream and a target audio data stream, where the target video data stream and the target audio data stream are synchronized with the live streaming data stream of the target live streaming room.

For the target video data stream, the live streaming data adjustment module 125 may add the target video data stream to a video data stream of the live streaming data stream, to obtain a video data stream to which the target interaction data is added. For example, the live streaming data adjustment module 125 may add a picture corresponding to the target video data stream to a specific location on a live streaming screen in the target live streaming room. In this way, when watching the target live streaming, the viewer in the target live streaming room may see live streaming content of the target live streamer at a location other than the specific location in a process of seeing the virtual avatar displaying the target interaction content at the specific location.

For the target audio data stream, the live streaming data adjustment module 125 may add the target audio data stream to an audio data stream of the live streaming data stream, to obtain an audio data stream to which the target interaction data is added. For example, the live streaming data adjustment module 125 may superimpose the target audio data stream and the audio data stream of the live streaming data stream. In this way, when watching the target live streaming, the viewer in the target live streaming room may hear a sound produced by virtual avatar during display of the target interaction content, and may also hear a sound of the target live streamer during the live streaming.

In this way, the viewer who watches the target live streaming room may see not only the target live streamer during the live streaming, but also the target interaction content displayed by using the virtual avatar. In this way, it is equivalent to using the virtual avatar to assist the live streamer in interacting with the viewer in the live streaming room, so that a response can be made to the interaction between the viewer and the live streamer in a timely manner, to improve live streaming watching experience.

In the foregoing implementations, the virtual avatar control apparatus may control the virtual avatar to assist the live streamer in interacting with the viewer in the live streaming room. In some possible implementations, the virtual avatar control apparatus may further have a function of assisting the live streamer in the live streaming. The following describes two implementations in which the virtual avatar control apparatus assists the live streamer in the live streaming. It may be understood that the virtual avatar control apparatus may further assist the live streamer in the live streaming in another manner. Details are not described herein.

In a first implementation, the virtual avatar control apparatus may have language translation and subtitle display functions, to assist the target live streamer and the viewer who watches the target live streaming room in understanding languages of each other.

In an actual scenario, there may be a case in which there is a language barrier between a live streamer and a viewer. For example, the target live streamer and the viewer in the target live streaming room may come from different countries or regions. In this case, the viewer in the target live streaming room may not understand a word spoken by the target live streamer during the live streaming, and the target live streamer may not understand a meaning of a bullet comment sent by the viewer. Therefore, the virtual avatar control apparatus may have the language translation function, to assist the live streamer in the target live streaming room in communicating with the viewer.

After obtaining the live streaming bullet comment data, the virtual avatar control apparatus may translate the live streaming bullet comment data from a second target language into a text in a first target language. Then, the virtual avatar control apparatus may display the text in the first target language obtained through translation on the live streamer end. The target live streamer may learn, by viewing content displayed by the virtual avatar control apparatus, of content of the bullet comment sent by the viewer in the target live streaming room. The first target language is a language used by the target live streamer, and the second target language is a language used by the viewer in the target live streaming room. Optionally, the first target language and the second target language may be set on the live streamer end.

In addition, after obtaining the live streamer speech data, the virtual avatar control apparatus may first convert the live streamer speech data into text data, and then convert a text in the first target language into a text in the second target language, to obtain target subtitle data. Then, the virtual avatar control apparatus may add the target subtitle data to the live streaming data of the target live streaming room. For example, the virtual avatar control apparatus may generate a video data stream based on the target subtitle data, and add the video data stream generated based on the target subtitle data to the live streaming data stream of the target live streaming room. In this way, the viewer who watches the target live streaming room may see the target subtitle data on a live streaming screen in the target live streaming room, to understand the word spoken by the target live streamer during the live streaming.

In a second implementation, the virtual avatar control apparatus may assist the target live streamer in controlling the target live streaming room.

In an actual scenario, a live streamer may control live streaming parameters of the live streaming room, for example, may adjust brightness of the live streaming room, a filter of the live streaming room, and a shooting angle of a camera. Currently, the live streamer needs to manually control the live streaming parameters of the live streaming room, resulting in low efficiency. In this embodiment of this application, the virtual avatar control apparatus may help the target live streamer adjust the live streaming parameter of the target live streaming room, to improve live streaming efficiency of the target live streamer.

Specifically, the target live streamer may send a live streaming room operation instruction by using a speech, where the live streaming room operation instruction is for adjusting the live streaming parameter of the live streaming room. After obtaining the live streamer speech data, the virtual avatar control apparatus may parse the live streamer speech data, to determine the live streaming room operation instruction sent by the target live streamer. Then, the virtual avatar control apparatus may adjust the live streaming parameter of the target live streaming room based on the live streaming room operation instruction. In this way, the target live streamer may adjust the live streaming parameter of the target live streaming room by using a speech, and the target live streamer does not need to perform manual adjustment, to improve live streaming efficiency.

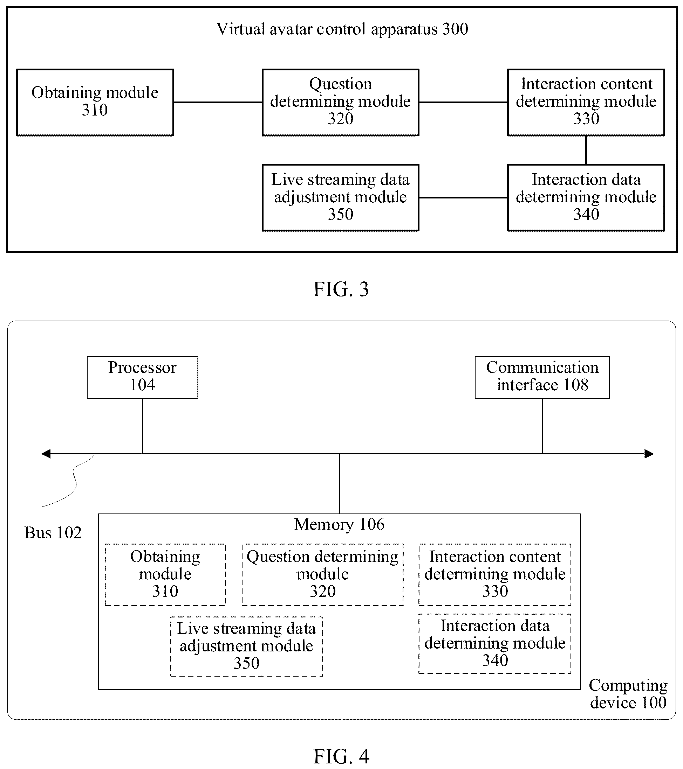

This application further provides a virtual avatar control apparatus. The virtual avatar control apparatus may be used on the live streamer end 10 in the implementation shown in FIG. 1, for example, may run on the live streamer client or the live streamer serving end, to implement the functions of the virtual avatar control apparatus in the implementation shown in FIG. 2. Specifically, as shown in FIG. 3, the virtual avatar control apparatus 300 includes:
an obtaining module 310, configured to obtain live streaming interaction data of a live streaming room, where the live streaming interaction data includes live streaming bullet comment data and live streamer speech data, and the live streaming room includes a virtual avatar and a live streamer;
a question determining module 320, configured to determine a target to-be-answered question based on the live streaming bullet comment data, where the live streaming bullet comment data is sent by a viewer in the live streaming room;
an interaction content determining module 330, configured to determine target interaction content based on the target to-be-answered question and the live streaming interaction data, where the target interaction content includes reply content of the target to-be-answered question;
an interaction data determining module 340, configured to determine target interaction data based on the target interaction content, where the target interaction data is for displaying the target interaction content to the viewer in the live streaming room by using the virtual avatar, and the target interaction data includes target audio data and target video data; and
a live streaming data adjustment module 350, configured to add the target interaction data to live streaming data of the live streaming room.

The obtaining module 310, the question determining module 320, the interaction content determining module 330, the interaction data determining module 340, and the live streaming data adjustment module 350 may all be implemented by software, or may be implemented by hardware. For example, the following uses the question determining module 320 as an example to describe an implementation of the question determining module 320. Similarly, for implementations of the obtaining module 310, the interaction content determining module 330, the interaction data determining module 340, and the live streaming data adjustment module 350, refer to an implementation of the question determining module 320.

A module is used as an example of a software functional unit, and the question determining module 320 may include code run on a computing instance. The computing instance may include at least one of a physical host (a computing device), a virtual machine, and a container. Further, there may be one or more computing instances. For example, the question determining module 320 may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is disposed in one region. A communication gateway needs to be disposed in each VPC for communication between two VPCs in a same region and cross-region communication between VPCs in different regions. Interconnection between VPCs is implemented through the communication gateway.

A module is used as an example of a hardware functional unit, and the question determining module 320 may include at least one computing device, for example, a server. Alternatively, the question determining module 320 may be a device implemented by using an application-specific integrated circuit (application-specific integrated circuit, ASIC), a programmable logic device (programmable logic device, PLD), or the like. The PLD may be implemented by using a complex programmable logic device (complex programmable logic device, CPLD), a field programmable gate array (field programmable gate array, FPGA), generic array logic (generic array logic, GAL), or any combination thereof.

A plurality of computing devices included in the question determining module 320 may be distributed in a same region, or may be distributed in different regions. The plurality of computing devices included in the question determining module 320 may be distributed in a same AZ, or may be distributed in different AZs. Similarly, the plurality of computing devices included in the question determining module 320 may be distributed in a same VPC, or may be distributed in a plurality of VPCs. The plurality of computing devices may be any combination of computing devices such as a server, an ASIC, a PLD, a CPLD, an FPGA, and GAL.

It should be noted that, in another embodiment, the obtaining module 310 may be configured to perform any step in the virtual avatar control method, the question determining module 320 may be configured to perform any step in the virtual avatar control method, the interaction content determining module 330 may be configured to perform any step in the virtual avatar control method, the interaction data determining module 340 may be configured to perform any step in the virtual avatar control method, and the live streaming data adjustment module 350 may be configured to perform any step in the virtual avatar control method, steps that the obtaining module 310, the question determining module 320, the interaction content determining module 330, the interaction data determining module 340, and the live streaming data adjustment module 350 are responsible for implementing may be specified based on a requirement. The obtaining module 310, the question determining module 320, the interaction content determining module 330, the interaction data determining module 340, and the live streaming data adjustment module 350 separately implement different steps in the virtual avatar control method, to implement all functions of the virtual avatar control apparatus.

This application further provides a computing device 100. As shown in FIG. 4, the computing device 100 includes a bus 102, a processor 104, a memory 106, and a communication interface 108. The processor 104, the memory 106, and the communication interface 108 communicate with each other through the bus 102. The computing device 100 may be a server or a terminal device. It should be understood that quantities of processors and memories in the computing device 100 are not limited in this application.

The bus 102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 4. However, this does not indicate that there is only one bus or only one type of bus. The bus 102 may include a path for transferring information between various components (for example, the memory 106, the processor 104, and the communication interface 108) of the computing device 100.

The processor 104 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 106 may include a volatile memory (volatile memory), for example, a random access memory (random access memory, RAM). The processor 106 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 106 stores executable program code, and the processor 104 executes the executable program code to separately implement functions of the foregoing obtaining module 310, question determining module 320, interaction content determining module 330, interaction data determining module 340, and live streaming data adjustment module 350, to implement the virtual avatar control method. In other words, the memory 106 stores instructions for performing the virtual avatar control method.

Alternatively, the memory 106 stores executable code, and the processor 104 executes the executable code to implement functions of the foregoing virtual avatar control apparatus, to implement the virtual avatar control method. In other words, the memory 106 stores instructions for performing the virtual avatar control method.

The communication interface 108 implements communication between the computing device 100 and another device or a communication network by using a transceiver module, for example, but not limited to a network interface card or a transceiver.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

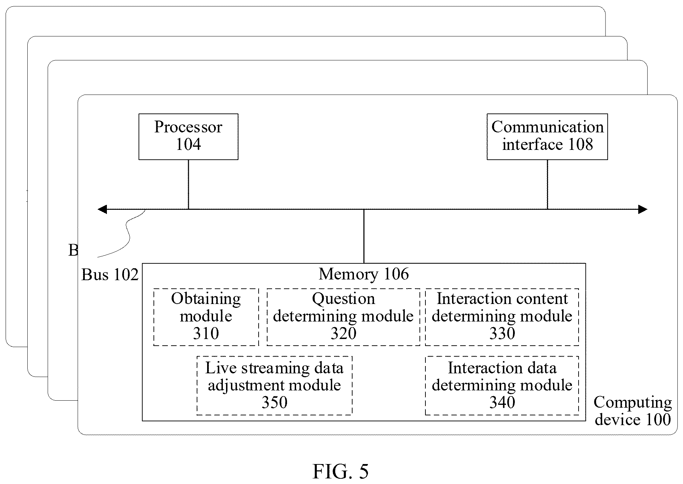

As shown in FIG. 5, the computing device cluster includes at least one computing device 100. A memory 106 or memories 106 in one or more computing devices 100 in the computing device cluster may store same instructions for performing the virtual avatar control method.

In some possible implementations, the memory 106 or memories 106 in the one or more computing devices 100 in the computing device cluster may alternatively separately store some instructions for performing the virtual avatar control method. In other words, a combination of the one or more computing devices 100 may jointly execute instructions for performing the virtual avatar control method.

It should be noted that memories 106 in different computing devices 100 in the computing device cluster may store different instructions for separately performing some functions of the virtual avatar control apparatus. In other words, the instructions stored in the memories 106 in the different computing devices 100 may implement functions of one or more of the obtaining module 310, the question determining module 320, the interaction content determining module 330, the interaction data determining module 340, and the live streaming data adjustment module 350.

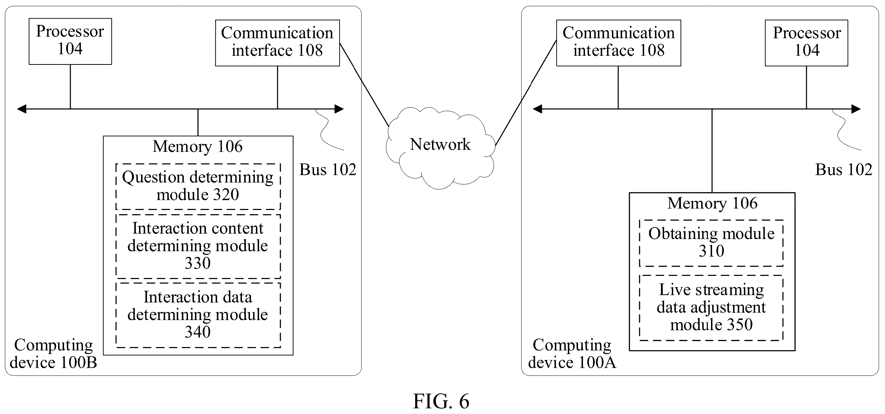

In some possible implementations, the one or more computing devices in the computing device cluster may be connected through a network. The network may be a wide area network, a local area network, or the like. FIG. 6 shows a possible implementation. As shown in FIG. 6, two computing devices 100A and 100B are connected through a network. Specifically, each computing device is connected to the network through a communication interface of the computing device. In this possible implementation, a memory 106 in the computing device 100A stores instructions for performing functions of the obtaining module 310 and the live streaming data adjustment module 350. In addition, a memory 106 in the computing device 100B stores instructions for performing functions of the question determining module 320, the interaction content determining module 330, and the interaction data determining module 340.

In consideration of the virtual avatar control method provided in this application, a connection manner between computing device clusters shown in FIG. 6 may include two steps: determining interaction data and adjusting live streaming data. In this way, it is considered that a function of determining target interaction data is performed by the computing device 100B, and a function of adjusting live streaming data is performed by the computing device 100B.

It should be understood that functions of the computing device 100A shown in FIG. 6 may alternatively be completed by a plurality of computing devices 100. Similarly, functions of the computing device 100B may alternatively be completed by a plurality of computing devices 100.

An embodiment of this application further provides another computing device cluster. For a connection relationship between computing devices in the computing device cluster, refer to the connection manners of the computing device clusters in FIG. 5 and FIG. 6 similarly. A difference is that a memory 106 or memories 106 in one or more computing devices 100A in the computing device cluster may store same instructions for performing the virtual avatar control method.

In some possible implementations, a memory or memories in one or more computing devices 100B in the computing device cluster may alternatively separately store some instructions for performing the virtual avatar control method. In other words, a combination of one or more computing devices may jointly execute instructions for performing the virtual avatar control method.

It should be noted that memories 106 in different computing devices 100A in the computing device cluster may store different instructions for performing a part of functions of the virtual avatar control method. In other words, instructions stored in the memories 106 in the different computing devices 100A may implement functions of one or more apparatuses in a client, a serving end, and a model.

An embodiment of this application further provides a computer program product including instructions. The computer program product may be software or a program product that includes instructions and that can run on a computing device or be stored in any usable medium. When the computer program product runs on at least one computing device, the at least one computing device is caused to perform the virtual avatar control method.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, where the instructions instruct a computing device to perform the virtual avatar control method, or instruct a computing device to perform the virtual avatar control method.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof. Such modifications or replaces do not cause the essence of corresponding technical solutions to depart from the protection scope of the technical solutions of embodiments of the present invention.

## Claims

1. A virtual avatar control method, wherein the method is applied to a virtual avatar control apparatus, the virtual avatar control apparatus is located in at least one data center, and the method comprises:
obtaining live streaming interaction data of a live streaming room, wherein the live streaming interaction data comprises live streaming bullet comment data and live streamer speech data, and the live streaming room comprises a virtual avatar and a live streamer;
determining a target to-be-answered question based on the live streaming bullet comment data, wherein the live streaming bullet comment data is sent by a viewer in the live streaming room;
determining target interaction content based on the target to-be-answered question, wherein the target interaction content comprises reply content of the target to-be-answered question;
determining target interaction data based on the target interaction content, wherein the target interaction data is for displaying the target interaction content to the viewer in the live streaming room by using the virtual avatar, and the target interaction data comprises target audio data and target video data; and
adding the target interaction data to live streaming data of the live streaming room.

2. The method according to claim 1, wherein the determining the target to-be-answered question based on the live streaming bullet comment data comprises:
determining at least one to-be-answered question based on the live streaming bullet comment data; and
determining the target to-be-answered question from the at least one to-be-answered question based on the live streamer speech data, wherein the live streamer speech data does not comprise audio data corresponding to the reply content of the target to-be-answered question.

3. The method according to claim 1 or 2, wherein before the adding the target interaction data to the live streaming data of the live streaming room, the method further comprises:
determining that there is a pause in a live streamer speech in the live streamer speech data.

4. The method according to any one of claims 1 to 3, wherein the virtual avatar control apparatus comprises a virtual avatar knowledge base, and the determining the target to-be-answered question based on the live streaming bullet comment data comprises:
determining a bullet comment intention information set by clustering the live streaming bullet comment data; and
determining the target to-be-answered question based on the bullet comment intention information set; and
the determining the target interaction content based on the target to-be-answered question comprises:
determining the reply content of the target to-be-answered question from the virtual avatar knowledge base based on the target to-be-answered question; and
determining the target interaction content based on the reply content.

5. The method according to claim 4, wherein the method further comprises:
updating the virtual avatar knowledge base based on the target to-be-answered question and audio data for answering the target to-be-answered question.

6. The method according to any one of claims 1 to 5, wherein the determining the target interaction data based on the target interaction content comprises:
generating the corresponding target audio data based on the target interaction content; and
generating the target video data based on the virtual avatar and the target audio data, wherein the target video data is video data of the virtual avatar producing audio corresponding to the target interaction content.

7. The method according to claim 6, wherein the generating the corresponding target audio data based on the target interaction content comprises:
determining a live streamer emotion category by analyzing the live streamer speech data; and
generating, based on the target interaction content, the target audio data that matches the live streamer emotion category.

8. The method according to any one of claims 1 to 7, wherein the method further comprises:
determining live streamer instruction information based on the live streamer speech data;
determining instruction interaction data based on the live streamer instruction information, wherein the instruction interaction data is for displaying, by using the virtual avatar to the viewer in the live streaming room, an action completed by the virtual avatar as instructed by the live streamer instruction information; and
adding the instruction interaction data to the live streaming data of the live streaming room.

9. The method according to any one of claims 1 to 8, wherein the method further comprises:
determining target subtitle data based on the live streamer speech data; and
adding the target subtitle data to the live streaming data of the live streaming room.

10. The method according to any one of claims 1 to 9, wherein the method further comprises:
determining a live streaming room operation instruction by parsing the live streamer speech data; and
adjusting the live streaming data of the live streaming room based on the live streaming room operation instruction.

11. A virtual avatar control apparatus, wherein the virtual avatar control apparatus is located in at least one data center, and the apparatus comprises:
an obtaining module, configured to obtain live streaming interaction data of a live streaming room, wherein the live streaming interaction data comprises live streaming bullet comment data and live streamer speech data, and the live streaming room comprises a virtual avatar and a live streamer;
a question determining module, configured to determine a target to-be-answered question based on the live streaming bullet comment data, wherein the live streaming bullet comment data is sent by a viewer in the live streaming room;
an interaction content determining module, configured to determine target interaction content based on the target to-be-answered question and the live streaming interaction data, wherein the target interaction content comprises reply content of the target to-be-answered question;
an interaction data determining module, configured to determine target interaction data based on the target interaction content, wherein the target interaction data is for displaying the target interaction content to the viewer in the live streaming room by using the virtual avatar, and the target interaction data comprises target audio data and target video data; and
a live streaming data adjustment module, configured to add the target interaction data to live streaming data of the live streaming room.

12. The apparatus according to claim 11, wherein the question determining module is specifically configured to: determine at least one to-be-answered question based on the live streaming bullet comment data; and determine the target to-be-answered question from the at least one to-be-answered question based on the live streamer speech data, wherein the live streamer speech data does not comprise audio data corresponding to the reply content of the target to-be-answered question.

13. The apparatus according to claim 11 or 12, wherein the question determining module is further configured to determine that there is a pause in a live streamer speech in the live streamer speech data.

14. The apparatus according to any one of claims 11 to 13, wherein the virtual avatar control apparatus comprises a virtual avatar knowledge base;
the question determining module is configured to: determine a bullet comment intention information set by clustering the live streaming bullet comment data; and determine the target to-be-answered question based on the bullet comment intention information set; and
the interaction content determining module is configured to: determine the reply content of the target to-be-answered question from the virtual avatar knowledge base based on the target to-be-answered question; and determine the target interaction content based on the reply content.

15. A computing device cluster, wherein the computing device cluster comprises at least one computing device, and each computing device comprises a processor and a memory, wherein
the memory is configured to store instructions; and
the processor is configured to cause, based on the instructions, the computing device cluster to perform the method according to any one of claims 1 to 10.

16. A computer-readable storage medium, wherein the computer-readable storage medium stores instructions, and when the instructions are run on a computing device, the computing device is caused to perform the method according to any one of claims 1 to 10.

17. A computer program product comprising instructions, wherein when the computer program product runs on a computing device, the computing device is caused to perform the method according to any one of claims 1 to 10.
